# EUROPEAN PATENT APPLICATION

(11) **EP 3 413 501 A1**
(43) Date of publication of application: **12.12.2018**
(21) Application number: 18174243.8
(22) Date of filing: 25.05.2018
(51) Int. Cl.: H04L 9/00, G06F 21/12

(54) **METHOD FOR DISTRIBUTING A SOFTWARE APPLICATION AND ENCRYPTION PROGRAM FOR A WHITE-BOX IMPLEMENTATION**

(30) Priority: 06.06.2017 US 201715614810
(71) Applicant: NXP B.V., 5656 AG Eindhoven (NL)
(72) Inventor: HOOGERBRUGGE, Jan, 5656 AG Eindhoven (NL); MICHIELS, Wilhelmus Petrus Adrianus Johannus, 5656 AG Eindhoven (NL); BOS, Joppe Willem, 5656 AG Eindhoven (NL)
(74) Representative: Krott, Michel

(57) **Abstract**

A method for distributing a software application having an encryption program is provided. In the method, the encryption program is generated for securing the software application, the encryption program being implemented by applying user diversification data that is unique to a user device having the encryption program and software application. The encryption program with the software application is distributed to a plurality of users without including the user diversification data. The user diversification data is made available for downloading from a computer server by each of the plurality of users. The user diversification data is downloaded separately from the encryption program, and the user diversification data is unique to, and generated specifically for, each of the plurality of users. This allows the distribution of application software without having to create a unique program for every user.

## Description

### Background

### Field

This disclosure relates generally to data processing and more specifically to a method for distributing a software application and encryption program for a white-box encryption implementation.

### Related Art

More and more functionality in electronic devices is being implemented in software instead of hardware. Software has the advantage of being less costly, better scalability, easier to personalize, and easier to update. This is also true for security-sensitive applications. An important development for security-sensitive applications has been the addition of Host-Card Emulation (HCE) to the Android operating system used in many mobile devices. This makes it possible to fully implement contactless payment cards, such as transportation payment cards and other smart cards, by an application that runs on an application processor for a mobile phone. The downside, however, is that such an application runs in an unprotected environment, where the most realistic attack model is the so-called white-box attack model. In this attack model the attacker is assumed to have full access to and full control over the execution environment.

Because the attacker has full access to the execution environment, it is important that data never be in the plain. One way this is achieved is by converting encrypted data to encoded data and vice versa. A white-box crypto cipher is typically implemented by many tables that corresponds to lookup tables, matrices, or state machines. The tables determine the encoding key that is applied on the encoded data.

It is desirable that every user of the program has a unique encoding key as well as a unique encryption key. This prevents an attacker from copying encoded data from one installed program to another. Furthermore, it is desirable to make white-box crypto implementations platform dependent so that the implementations can be bound to the platform, such as an android operating system. This prevents the installed program and its internal data from being copied to another platform. This means that the white-box tables and the derived encoding key have to be unique for every installed program.

### Brief Description of the Drawings

The present invention is illustrated by way of example and is not limited by the accompanying figures, in which like references indicate similar elements. Elements in the figures are illustrated for simplicity and clarity and have not necessarily been drawn to scale.
FIG. 1 illustrates distribution and user diversification steps in accordance with an embodiment.
FIG. 2 illustrates the user diversification step of FIG. 1 in more detail.
FIG. 3 illustrates a flowchart of a method for distributing a software application and encryption program for a white-box implementation in accordance with an embodiment.

### Detailed Description

Generally, there is provided, a method for distributing application software that has an encryption program for securing the application software. According to the method, the application software is distributed without white-box tables, a binding key, a derived encoding key, and other user specific parts. The application software may be distributed via the internet using, for example, one of the commonly used distribution mediums. During installation of the program, or on first usage of it, the program may connect to, for example, a back-end server in the cloud to receive the user specific white-box tables, derived encoding key, and binding key. These are unique for every user. The user will receive the application from the back-end server after successful registration or authentication. This allows distribution of the application software without having to create a program for every user that wants to install it.

In one embodiment, there is provided, a method for distributing a software application having an encryption program, the method including: generating the encryption program for securing the software application, the encryption program implemented by applying user diversification data that is unique to a user device of the encryption program and software application; distributing the encryption program and the software application to a plurality of users without providing the user diversification data; and making the user diversification data available for downloading from a computer server by each of the plurality of users, the user diversification data to be downloaded separately from the encryption program, the user diversification data is unique to, and generated specifically for, each of the plurality of users. The user diversification data may include look-up tables for the encryption program. The user diversification data may include look-up tables, the look-up tables for deriving an encoding key for use with the software application to generated encoded data from decrypted data. Providing the encryption program may further include providing the encryption program for use in a white-box implementation. The user diversification data may include an encryption key for the encryption program. The user diversification data may include a binding key for use in binding the encryption program look-up tables to a specific platform for running the encryption program and software application. The software application may be a payment application for a transit system. The encryption program may include one of either data encryption standard (DES) or advanced encryption standard (AES) encryption. The method may further include generating encoded data from decrypted data, wherein the software application may perform mathematical operations on the encoded data. Distributing the encryption program and the software application to a plurality of users may further include making the encryption program and the software application available for download by all of the plurality of users.

In another embodiment, there is provided, a method for distributing a software application having an encryption program, the method including: generating the encryption program for securing the software application in a white-box implementation, the encryption program implemented by applying user diversification data that is unique to a user device of the encryption program and software application; distributing the encryption program and the software application to a plurality of users without providing the user diversification data; and making the user diversification data available for downloading from a computer server by each of the plurality of users, the user diversification data is downloaded separately from the encryption program, the user diversification data is unique to, and generated specifically for, each of the plurality of users. The user diversification data may include white-box look-up tables for the encryption program. The user diversification data may include look-up tables, the look-up tables for deriving an encoding key for use with the software application to generate encoded data from decrypted data. The user diversification data may include an encryption key for the encryption program. The user diversification data may include a binding key for use in binding the encryption program look-up tables to a specific platform for running the encryption program and software application. The software application may be a payment application for a transit system. The encryption program may include one of either data encryption standard (DES) or advanced encryption standard (AES) encryption. The method may further include generating encoded data from decrypted data, wherein the software application performs mathematical operations on the encoded data. Distributing the encryption program and the software application to a plurality of users may further include making the encryption program and the software application available for download by all of the plurality of users. The user device may be a smartphone.

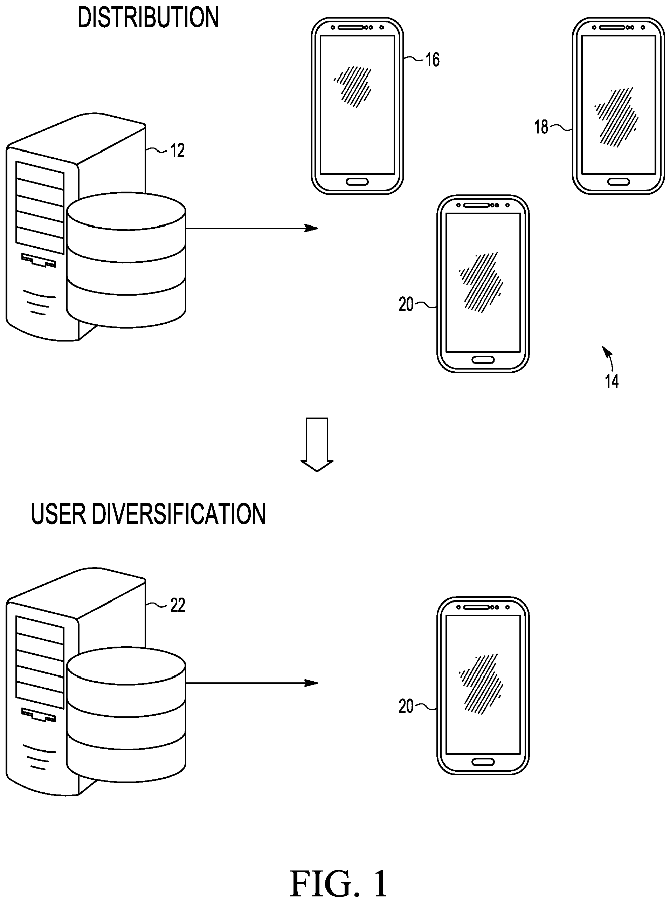

FIG. 1 illustrates distribution and user diversification steps in accordance with a white-box implementation. In FIG. 1, a software application and encryption program for securing the software application are distributed from, for example, a computer server 12 to a plurality of user devices 14 via, for example, the internet. The plurality of user devices 14 include representative mobile devices 16, 18, and 20. The encryption program and the software application are distributed to the plurality of users 14 without providing user diversification data such as white-box tables, derived encoding keys, and binding keys. The user diversification data is unique to each user device having the encryption program and software application.

After distribution, or after a user has downloaded the software application and encryption program, the user diversification data is made available for downloading from a computer server 22 by each of the plurality of users, such as user device 20 as illustrated in the user diversification step of FIG. 1. The user diversification data is downloaded separately from the encryption program, the user diversification data is unique to, and generated specifically for, each of the plurality of users. The user diversification data can be downloaded to user devices differently in different embodiments.

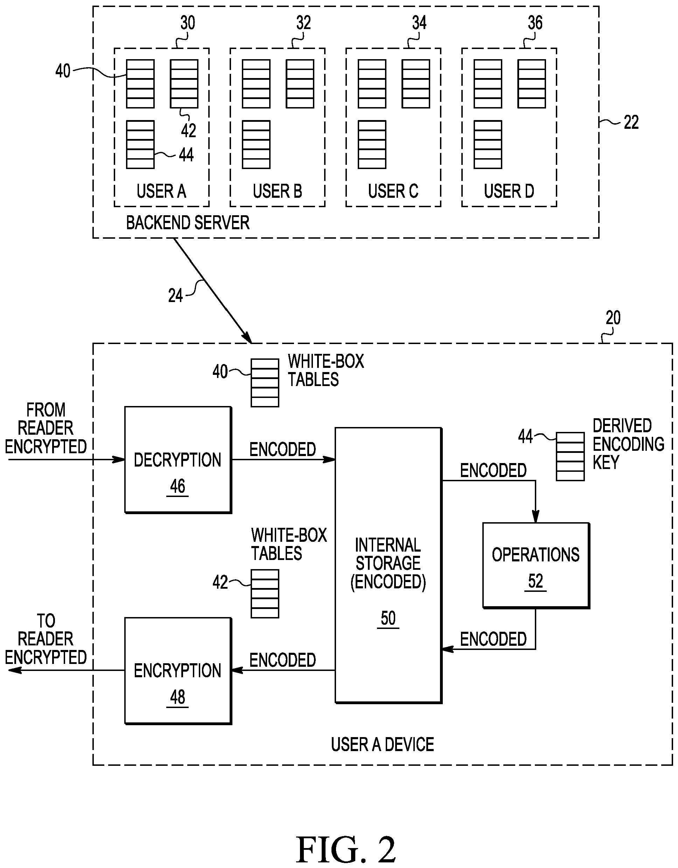

FIG. 2 illustrates the user diversification step of FIG. 1 in more detail. In FIG. 2, backend server 22 includes user diversification data 30, 32, 34, and 36 for user A, user B, user C, and user D, respectively. User diversification data 30, 32, 34, and 36 are all different. As discussed above, the user diversification data includes white-box tables and derived encoding keys. In FIG. 2, user diversification data 30 includes white-box tables 40 and 42, and derived encoding key 44. Backend server 22 has this data for every user that it serves. Every user receives unique white-box crypto tables and a unique derived encoding key. During installation of the encryption program, or on first usage of it, the user device may connect to, for example, back-end server 22 in the cloud to receive the user specific white-box tables, derived encoding key, and binding key. As stated above, these are unique for every user. The user will receive the application from the back-end server after successful registration or authentication. This allows distribution of the application software without having to create a program for every user that wants to install it.

User device 20 includes encryption and decryption software, internal storage 50, and application operations 52. Application operations 52 may include, for example, a payment application. In user device 20, after downloading, white-box tables 40 and 42 are used for decryption 46 and encryption 48. The derived encoding key 44 is used for operations 52, such as for processing a transit payment.

Security-sensitive applications can be run on a smartphone by using Host-Card Emulation (HCE) with, for example, the Android operating system. The functions of contactless payment cards, such as transportation payment cards and other smart cards can be fully implemented by an application that runs on an application processor for a mobile phone. The software application will include an encryption program for securing the software application. The typical standards for data encryption are data encryption standard (DES) and advanced encryption standard (AES) which provide relatively strong security. An incoming message is decrypted and then encoded using a derived encoding key. The internal data encoding of the application processor is typically less secure. This is acceptable because it is necessary to perform simple operations on the encoded data such as addition, subtraction, and comparison. The implemented encoding scheme can be kept confidential by using obscurity.

When being used for a transportation application, user device 20 may receive an encrypted message from a reader via, for example, near field communication (NFC). The encrypted message is decrypted using white-box tables 40 and encoded by decryption unit 46. The encoded message may be stored in internal storage 50. When needed, at least part of the encoded message is processed in operations 52. The encoded results may be stored in storage 50 and passed on to be encrypted by encryption unit 48 using white-box tables 42. The encrypted message may be transmitted from external user device 20 to, for example, an NFC reader. The message is never allowed to be in the plain in user device 20.

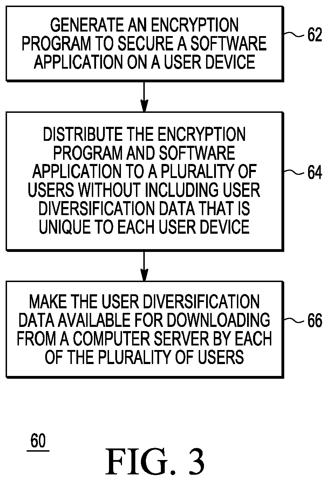

FIG. 3 illustrates a flowchart of a method 60 for distributing a software application and encryption program for a white-box implementation in accordance with an embodiment. Method 60 begins with step 62. In step 62, an encryption program is generated to secure a software application on a user device, such as user device 20. User device 20 may be a mobile phone. The encryption program will be implemented by applying user diversification data that is unique to a user device of the encryption program and software application. At step 64, the encryption program and software application is distributed to a plurality of users without including the user diversification data. At step 66, the user diversification data is made available for downloading and activation from a computer server by each of the plurality of users. Method 60 allows distribution of the application software without having to create a customized program for every user that wants to install it.

Because the apparatus implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention. Also, the disclosed embodiments may be implemented in software, hardware, or a combination of software and hardware.

As used herein, the term "non-transitory machine-readable storage medium" will be understood to exclude a transitory propagation signal but to include all forms of volatile and non-volatile memory. When software is implemented on a processor, the combination of software and processor becomes a single specific machine. Although the various embodiments have been described in detail, it should be understood that the invention is capable of other embodiments and its details are capable of modifications in various obvious respects.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

The term "coupled," as used herein, is not intended to be limited to a direct coupling or a mechanical coupling.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

## Claims

1. A method for distributing a software application having an encryption program, the method comprising:
generating the encryption program for securing the software application, the encryption program implemented by applying user diversification data that is unique to a user device of the encryption program and software application;
distributing the encryption program and the software application to a plurality of users without providing the user diversification data; and
making the user diversification data available for downloading from a computer server by each of the plurality of users, the user diversification data to be downloaded separately from the encryption program, the user diversification data is unique to, and generated specifically for, each of the plurality of users.

2. The method of claim 1, wherein the user diversification data includes look-up tables for the encryption program.

3. The method of claim 1 or 2, wherein the user diversification data includes look-up tables, the look-up tables for deriving an encoding key for use with the software application to generate encoded data from decrypted data.

4. The method of any preceding claim, wherein providing the encryption program further comprises providing the encryption program for use in a white-box implementation.

5. The method of any preceding claim, wherein the user diversification data includes an encryption key for the encryption program.

6. The method of any preceding claim, wherein the user diversification data includes a binding key for use in binding the encryption program look-up tables to a specific platform for running the encryption program and software application.

7. The method of any preceding claim, wherein the software application is a payment application for a transit system.

8. The method of any preceding claim, wherein the encryption program comprises one of either data encryption standard (DES) or advanced encryption standard (AES) encryption.

9. The method of any preceding claim, further comprising generating encoded data from decrypted data, wherein the software application performs mathematical operations on the encoded data.

10. The method of any preceding claim, wherein distributing the encryption program and the software application to a plurality of users further comprises making the encryption program and the software application available for download by all of the plurality of users.

11. The method of any preceding claim, wherein generating the encryption program for securing the software application includes generating the encryption program for securing the software application in a white-box implementation.

12. The method of claim 11, wherein the user diversification data includes white-box look-up tables for the encryption program.

13. The method of any preceding claim, wherein the user device is a smartphone.
